# EUROPÄISCHE PATENTSCHRIFT

(11) **EP 3 504 697 B1**
(45) Veröffentlichungstag und Bekanntmachung des Hinweises auf die Patenterteilung: **22.09.2021**
(21) Anmeldenummer: 17752040.0
(22) Anmeldetag: 27.07.2017
(51) Int. Cl.: G08G 1/01, G08G 1/0967, G07C 5/00

(54) **VERFAHREN ZUM VERMESSEN EINES FAHREREIGNISSES, SERVERVORRICHTUNG UND SYSTEM AUS DER SERVERVORRICHTUNG UND MEHREREN KRAFTFAHRZEUGEN**
METHOD FOR MEASURING A DRIVING EVENT, SERVER DEVICE, AND SYSTEM COMPRISED OF THE SERVER DEVICE AND A PLURALITY OF MOTOR VEHICLES
PROCÉDÉ POUR MESURER UN ÉVÉNEMENT DE CONDUITE, DISPOSITIF SERVEUR ET SYSTÈME CONSTITUÉ DE CE DISPOSITIF SERVEUR ET DE PLUSIEURS VÉHICULES AUTOMOBILES

(30) Priorität: 29.08.2016 DE 102016216152
(43) Veröffentlichungstag der Anmeldung: 03.07.2019
(73) Patentinhaber: Audi AG, 85045 Ingolstadt (DE)
(72) Erfinder: KRÜGER, Sebastian, 85080 Gaimersheim (DE)
(86) Internationale Anmeldenummer: PCT/EP2017/069099
(87) Internationale Veröffentlichungsnummer: WO 2018/041490

(56) Entgegenhaltungen:
- US-A1- 2016 133 130

## Beschreibung

Die Erfindung betrifft ein Verfahren zum Vermessen eines Fahrereignisses, das jeweils unabhängig in mehreren Kraftfahrzeugen stattfinden kann. Ein solches Fahrereignis kann zum Beispiel eine Fahrt durch Regen oder eine Fahrt über ein Schlagloch sein. Das Fahrereignis kann auch fahrzeugintern stattfinden, zum Beispiel das Zusammenspiel oder Zusammenwirken mehrerer Steuergeräte betreffen. Zu der Erfindung gehört auch eine Servervorrichtung, mittels welcher das Verfahren durchgeführt werden kann. Die Servervorrichtung kann zum Beispiel ein Server des Internets sein. Schließlich umfasst die Erfindung auch ein System mit der Servervorrichtung und mehreren Kraftfahrzeugen.

Um Informationen über Fahrereignisse in einer stationären Servervorrichtung zu sammeln, kann vorgesehen sein, Kraftfahrzeuge jeweils mit einer Detektionseinrichtung auszustatten, die ein solches Fahrereignis detektiert und Ereignisdaten, die das Fahrereignis beschreiben, an die Servervorrichtung aussendet. Heutzutage in Kraftfahrzeugen verbaute Detektionseinrichtungen können Situationen oder Fahrereignisse bezüglich des Fahrzustandes, des Fahrzeugumfeldes und/oder Umweltbedingungen detektieren. Die Servervorrichtung kann die empfangenen Ereignisdaten dann dazu nutzen, diese Fahrereignisse in einer digitalen Straßenkarte zu verorten. So können zum Beispiel Straßenverhältnisse (Rauigkeit, Schlaglöcher, Nässe) oder lokale Gefahreninformationen (liegen gebliebene Fahrzeuge, Wildwechsel) kartographiert werden. Die Qualität der Ereignisdaten hängt davon ab, wie die jeweilige Detektionseinrichtung in den Kraftfahrzeugen konfiguriert ist. Aufgrund der nur begrenzten Übertragungsbandbreite der Funkverbindung zwischen Kraftfahrzeug einerseits und Servervorrichtung andererseits und/oder aufgrund der Kosten für die Übertragung von Ereignisdaten muss mittels der Konfiguration einer Detektionseinrichtung ein Abgleich geschaffen werden. Jede Detektionseinrichtung muss so konfiguriert werden, dass die Ereignisdaten, die zu einem Fahrereignis erzeugt werden, dieses Fahrereignis einerseits ausreichend genau beschreiben und andererseits die Datenmenge der Ereignisdaten gering genug ist, um sie wirtschaftlich und/oder mit der zur Verfügung stehenden Übertragungsbandbreite überhaupt an die Servervorrichtung übertragen zu können.

Eine Detektionseinrichtung zum Erfassen eines Zustands einer Fahrbahn ist zum Beispiel aus der DE 10 2014 004 167 A1 bekannt.

Aus der DE 10 2014 223 620 A1 ist bekannt, auf der Grundlage von Ereignisdaten einer Detektionseinrichtung eines Kraftfahrzeugs einen Fahrbahnzustand zu erkennen und ein anderes Kraftfahrzeug daraufhin zu überprüfen, ob dieses sich der Region ernährt, in welchem der Fahrbahnzustand erkannt wurde, und dieses Kraftfahrzeug entsprechend darauf vorzubereiten.

Aus der DE 10 2013 210 553 A1 ist bekannt, zu überprüfen, ob sich ein Kraftfahrzeug einem Fahrbahnabschnitt, der eine vorbestimmte Beschaffenheit aufweist, nähert, und das Kraftfahrzeug auf die Befahrung dieses Fahrbahnabschnittes vorzubereiten.

Die US 2014/0 324 247 A1 beschreibt ein Bildverarbeitungsgerät eines Kraftfahrzeugs und ein Verfahren zum Teilen von Daten, die beispielsweise eine Fahrtroute verifizieren können.

US 2016/133130 beschreibt ein Verfahren zur Erkennung gefährlicher Fahrzustände mit Hilfe von partizipativen Erfassungssystemen in Fahrzeugen.

Der Erfindung liegt die Aufgabe zugrunde, mittels Detektionseinrichtungen von Kraftfahrzeugen Fahrereignisse effizient zu erfassen.

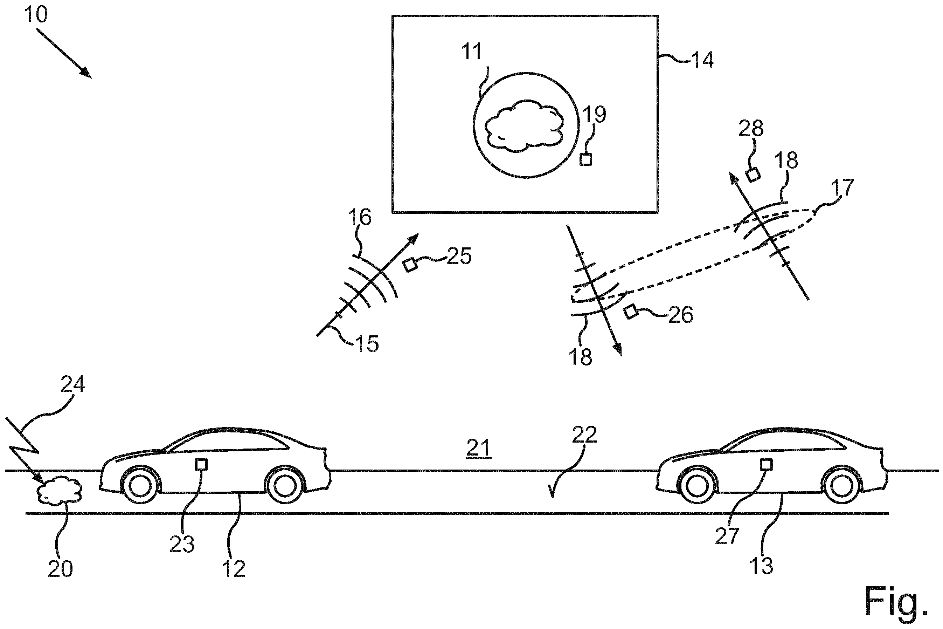

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figur beschrieben.

Durch die Erfindung ist ein Verfahren zum Messen oder Erkennen oder Vermessen eines Fahrereignisses gegeben. Das Fahrereignis kann zum Beispiel eine Begegnung eines Kraftfahrzeugs mit einem vorbestimmten Objekt in einer Umgebung sein. Bei der Umgebung kann es sich zum Beispiel um eine Straße oder eine Fahrbahn handeln. Bei dem Objekt kann sich zum Beispiel um ein Schlagloch oder um eine Fahrbahnoberfläche mit einer vorbestimmten Eigenschaft oder um ein liegen gebliebenes anderes Kraftfahrzeug oder eine Wildtier handeln. Das Fahrereignis kann auch eine Vorbeifahrt oder ein Passieren an einem bestimmten Objekt, zum Beispiel einem Straßenschild, sein. Als Fahrereignis kann zusätzlich oder alternativ dazu auch eine Fahrt bei einer vorbestimmten Fahrbedingung erfasst werden. Entsprechend kann ein Fahrereignis zum Beispiel eine Fahrt bei Regen und/oder bei einer vorbestimmten Umgebungstemperatur sein. Das Fahrereignis kann auch im Ausbleiben eines erwarteten Ereignisses bestehen, wenn zum Beispiel ein in Kartendaten vermerktes Schlagloch nicht durch eine Sensoreinrichtung der Kraftfahrzeugs detektiert wird. Auch durch den Fahrer des Kraftfahrzeugs kann ein Fahrereignis initiiert oder ausgelöst werden, zum Beispiel eine vorbestimmte Lenkbewegung z.B. in Folge eines Ausweichmanövers.

Durch eine stationäre Servervorrichtung werden aus einem ersten Kraftfahrzeug erste Ereignisdaten, welche das Fahrereignis signalisieren, empfangen. Das erste Kraftfahrzeug kann das Fahrereignis mittels einer Detektionseinrichtung erkennen. Beispielsweise kann für das Fahrereignis "Fahrt bei Regen" ein Regensensor des ersten Kraftfahrzeugs als Detektionseinrichtung genutzt sein. Bei dem Fahrereignis "Fahrt über ein Schlagloch" kann zum Beispiel als Detektionseinrichtung ein Beschleunigungssensor für Erschütterungen des ersten Kraftfahrzeugs und/oder ein Federwegsensor zum Erkennen einer Aktivität von Schwingungsdämpfers des Kraftfahrzeugs genutzt sein.

Falls das Fahrereignis in einem Kraftfahrzeug sehr kurz ist, wie zum Beispiel eine Fahrt über ein Schlagloch, so ist es nach dem Empfangen der ersten Ereignisdaten zu spät, mittels der Detektionseinrichtung des ersten Kraftfahrzeugs weitere Ereignisdaten mit einer größeren Messgenauigkeit und/oder aus zusätzlichen Sensoren zu dem Fahrereignis anzufordern. Allerdings ist es auch ineffizient, mittels der Detektionseinrichtung dauerhaft für jedes Fahrereignis mehr als nur die ersten Ereignisdaten zu erzeugen, da dann auch sehr große Datenmengen an die Servervorrichtung übertragen werden müssten.

Stattdessen sieht die Erfindung vor, dass durch die Servervorrichtung in Abhängigkeit von den ersten Ereignisdaten Konfigurationsdaten zum Umkonfigurieren einer Detektionseinrichtung eines von dem ersten Kraftfahrzeug verschiedenen zweiten Kraftfahrzeugs erzeugt werden und die Konfigurationsdaten an das zweite Kraftfahrzeug ausgesendet werden, damit das zweite Kraftfahrzeug zweite Ereignisdaten gemäß Anforderungen der Servervorrichtung erzeugt und aussendet, die ebenfalls das Fahrereignis beschreiben, wie es in dem zweiten Kraftfahrzeug stattfindet. Das zweite Kraftfahrzeug erzeugt dann die zweiten Ereignisdaten mittels seiner Detektionseinrichtung, die hierbei aber die zweiten Ereignisdaten in Abhängigkeit von den Konfigurationsdaten erzeugt, also zum Beispiel das Fahrereignis genauer mittels mehr Ereignisdaten beschreibt als die ersten Ereignisdaten, weil dies durch die Konfigurationsdaten so festgelegt wird. Somit wird die Detektionseinrichtung des zweite Kraftfahrzeugs mittels der Konfigurationsdaten nur im Bedarfsfall, d.h. wenn durch das erste Kraftfahrzeug und die ersten Ereignisdaten ein Fahrereignis signalisiert wurde, für eine genauere und/oder umfangreichere Beschreibung des Fahrereignisses konfiguriert. Somit kann in Kraftfahrzeugen deren jeweilige Detektionseinrichtung zunächst in der Weise konfiguriert betrieben werden, dass sie lediglich erste Ereignisdaten erzeugen, welche ein Fahrereignis nur signalisieren, ohne es genauer oder mit einem vorbestimmten Detaillierungsgrad zu beschreiben. Nur im Bedarfsfall, d.h. bei erkanntem Fahrereignis, wird mittels der Konfigurationsdaten von zumindest einem zweiten Kraftfahrzeug dessen Detektionseinrichtung umkonfiguriert, so dass die zweiten Ereignisdaten zu dem Fahrereignis erzeugt werden.

Somit wird eine Funkverbindung zum Übertragen von Ereignisdaten effizient genutzt, indem mittels der Konfigurationsdaten eine Datenmenge der zweiten Ereignisdaten eingestellt wird, die größer als eine Datenmenge der ersten Ereignisdaten ist. Somit wird eine Übertragungsbandbreite der Kommunikationsverbindung des ersten Kraftfahrzeugs zur Servervorrichtung beim Übertragen der ersten Ereignisdaten zu einem geringeren Prozentsatz ausgelastet als eine Übertragungsbandbreite einer Kommunikationseinrichtung des zweite Kraftfahrzeugs zur Servervorrichtung. Die Auslastung oder Belastung der Kommunikationsverbindung durch die Datenmenge der zweiten Ereignisdaten findet nur statt, falls überhaupt erfolgreich durch die ersten Ereignisdaten ein Fahrereignis signalisiert wurde. Somit wird die zur Verfügung stehende Übertragungsbandbreite nur dann zu einem vorbestimmten Prozentsatz ausgelastet, falls zweite Ereignisdaten benötigt werden.

Entsprechend ist vorgesehen, dass die zweiten Ereignisdaten mehr Details des Fahrereignisses beschreiben als die ersten Ereignisdaten. Es können zum Beispiel mehr Sensordaten und/oder zusätzliche Sensordaten, die von der jeweiligen Detektionseinrichtung erzeugt werden, in den zweiten Ereignisdaten enthalten sein, die nicht in den ersten Ereignisdaten enthalten sind.

Es ist vorgesehen, dass die zweiten Ereignisdaten nur in relevantem Umfeld von entsprechenden Kraftfahrzeugen angefordert werden, d.h. das Aussenden der Konfigurationsdaten auf das relevante Umfeld begrenzt ist und keine Erfassung zweiter Ereignisdaten flächendeckend erfolgt. Hierzu ist auch vorgesehen, dass durch die Servervorrichtung nach dem empfangen der ersten Ereignisdaten für mehrere Kraftfahrzeuge ermittelt wird, in welchem davon das Fahrereignis ebenfalls stattfindet oder welchem davon das Fahrereignis bevorsteht. Beispielsweise kann ermittelt werden, welches der Kraftfahrzeuge sich einem Ort nähert, an welchem das erste Kraftfahrzeug das Fahrereignis detektiert hat. Zusätzlich oder alternativ zu einem Ort kann auch zum Beispiel eine Uhrzeit zugrundegelegt werden. So kann zum Beispiel über Konfigurationsdaten eingestellt werden, dass das zweite Kraftfahrzeug die zweiten Ereignisdaten zu einer bestimmten Uhrzeit und/oder innerhalb eines vorbestimmten Zeitraums erzeugt. So kann zum Beispiel eine Fahrt bei Dunkelheit als Fahrereignis rekonstruiert werden. Zusätzlich oder alternativ zu Ort und Uhrzeit kann zum Beispiel durch Konfigurationsdaten eingestellt werden, dass die zweiten Ereignisdaten wetterbasiert erfasst werden, unabhängig davon, ob sich das erste Kraftfahrzeug und das zweite Kraftfahrzeug in derselben Region befinden. Somit kann also durch die Konfigurationsdaten das Erzeugen der zweiten Ereignisdaten ortsbasiert und/oder zeitbasiert und/oder wetterbasiert ausgelöst werden.

Wie bereits ausgeführt, können durch die Konfigurationsdaten solche zweite Ereignisdaten erzeugt werden, die einen fahrzeuginternen Vorgang des zweite Kraftfahrzeugs beschreiben, zum Beispiel eine Kommunikation und/oder Steuerung eines Steuergeräts des Kraftfahrzeugs. Somit können vorbestimmte Vorgänge in Kraftfahrzeugen durch Erzeugen der zweiten Ereignisdaten protokolliert werden, falls anhand der ersten Ereignisdaten durch die Servervorrichtung erkannt wurde, dass es zu einem unerwünschten Betriebsverhalten im ersten Kraftfahrzeug gekommen ist. So kann z.B. die Betriebsweise eines vorbestimmten Fahrzeugtyps oder Fahrzeugmodells des ersten und des zweiten Kraftfahrzeugs überprüft werden.

Auf der Grundlage der zweiten Ereignisdaten wird auch eine Beschreibung des Fahrereignisses in einer digitalen Umgebungskarte eingetragen oder erzeugt. Hierdurch können zum Beispiel Objekte in der Umgebung, zum Beispiel Schlaglöcher und/oder eine vorbestimmte Fahrbahnbeschaffenheit und/oder ein liegen gebliebenes Fahrzeug und/oder eine Baustelle und/oder ein Straßenschild, auf der Grundlage der zweiten Ereignisdaten beschrieben und in der digitalen Umgebungskarte eingetragen oder kartographiert werden.

Um das erfindungsgemäße Verfahren durchzuführen, ist die beschriebene stationäre Servervorrichtung zum Vermessen eines Fahrereignisses nötig. Das Fahrereignis ereignet sich unabhängig in mehreren Kraftfahrzeugen. Wird das Fahrereignis durch das erste Kraftfahrzeug mittels der ersten Ereignisdaten beschrieben oder signalisiert, so kann durch die Servervorrichtung ein zweites Kraftfahrzeug ausgewählt und mittels der beschriebenen Konfigurationsdaten dahingehend konfiguriert werden, dass das zweite Kraftfahrzeug mit seiner Detektionseinrichtung die zweiten Ereignisdaten betreffend das Fahrereignis erzeugt. Natürlich kann durch die Serverrichtung mehr als ein einzelnes zweite Kraftfahrzeug, also mehrere zweite Kraftfahrzeuge, jeweils mittels jeweiligen Konfigurationsdaten konfiguriert werden, sodass mehrere zweite Kraftfahrzeuge jeweils zweite Ereignisdaten erzeugen und an die Servervorrichtung aussenden. Die Servervorrichtung weist zum Durchführen der die Servervorrichtung betreffenden Verfahrensschritte des erfindungsgemäßen Verfahrens eine Prozessoreinrichtung auf, die dazu eingerichtet ist, das Verfahren durchzuführen. Hierzu kann die Prozessoreinrichtung zumindest einen Mikrocontroller und/oder zumindest einen Mikroprozessor aufweisen. Des Weiteren kann die Prozessoreinrichtung einem Programmcode aufweisen, der dazu eingerichtet ist, bei Ausführen durch die Prozessoreinrichtung die Ausführungsform des erfindungsgemäßen Verfahrens durchzuführen. Der Programmcode kann zum Beispiel in einem Datenspeicher der Prozessoreinrichtung gespeichert sein. Die Servervorrichtung kann zum Beispiel als ein Server des Internets betrieben sein. Hierzu kann die Servervorrichtung zum Beispiel einen Computer oder einen Computerverbund aus mehreren Computern umfassen.

Durch Kombinieren der erfindungsgemäßen Servervorrichtung mit Kraftfahrzeugen ergibt sich das erfindungsgemäße System. Ein erstes Kraftfahrzeug des Systems weist eine Detektionseinrichtung zum Detektieren eines vorbestimmten Fahrereignisses und zum Erzeugen von ersten Ereignisdaten, die das Fahrereignis signalisieren, auf. Ein zweites Kraftfahrzeug weist eine mittels Konfigurationsdaten über eine Funkverbindung konfigurierbare Detektionseinrichtung zum Detektieren des Fahrereignisses und zum Erzeugen von zweiten Ereignisdaten auf. Die zweiten Ereignisdaten beschreiben das Fahrereignis, wobei eine Beschreibungsgenauigkeit der zweiten Ereignisdaten von den Konfigurationsdaten abhängig ist. Mit Beschreibungsgenauigkeit ist hierbei gemeint, dass eine Datenmenge der zweiten Ereignisdaten und/oder zumindest ein Sensor der Detektionseinrichtung, mittels welchem die Ereignisdaten erzeugt werden, und/oder unterschiedliche Aspekte des Fahrereignisses in Abhängigkeit von den Konfigurationsdaten eingestellt werden. Das System umfasst des Weiteren eine Ausführungsform der erfindungsgemäßen Servervorrichtung, die in der beschriebenen Weise dazu eingerichtet ist, aus dem ersten Kraftfahrzeug die ersten Ereignisdaten zu empfangen, daraufhin die Konfigurationsdaten zu erzeugen und an das zweite Kraftfahrzeug auszusenden, damit das zweite Kraftfahrzeug die zweiten Ereignisdaten abhängig von Konfigurationsdaten erzeugt und an die Servervorrichtung aussendet.

Zu der Erfindung gehören auch Weiterbildungen des erfindungsgemäßen Systems, welche Merkmale aufweisen, die bereits im Zusammenhang mit den Weiterbildungen des erfindungsgemäßen Verfahrens beschrieben worden sind. Aus diesem Grund sind die entsprechenden Weiterbildungen des erfindungsgemäßen Systems hier nicht noch einmal beschrieben.

Das erste Kraftfahrzeug und das zweite Kraftfahrzeug sind jeweils bevorzugt als Kraftwagen, insbesondere als Personenkraftwagen oder Lastkraftwagen, ausgestaltet.

Im Folgenden ist ein Ausführungsbeispiel der Erfindung beschrieben. Hierzu zeigt die einzige Figur (Fig.) eine schematische Darstellung einer Ausführungsform des erfindungsgemäßen Systems.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt ein System 10 mit einer Servervorrichtung 11, ein erstes Kraftfahrzeug 12 und ein zweites Kraftfahrzeug 13. Die Servervorrichtung 11 kann z.B. ein Server des Internets 14 sein. Die Servervorrichtung 11 kann beispielsweise auf der Grundlage eines Computers oder eines Computerverbunds gebildet sein.

Das Kraftfahrzeug 12 kann über eine Kommunikationsverbindung 15 mit der Servervorrichtung 11 gekoppelt sein. Die Kommunikationsverbindung 15 kann zum Beispiel auf der Grundlage einer Funkverbindung 16 gebildet sein, die mittels eines Mobilfunknetzwerks und/oder eines WLAN-Routers (WLAN - Wireless Local Area Network) gebildet sein kann. Das Kraftfahrzeug 13 kann über eine Kommunikationsverbindung 17 mit der Servervorrichtung 11 gekoppelt sein. Die Kombinationsverbindung 17 kann eine Funkverbindung 18 umfassen, die ebenfalls in der beschriebenen Weise mittels eines Mobilfunknetzwerks und/oder eines WLAN-Routers gebildet sein kann.

Die Servervorrichtung 11 kann mittels der Kraftfahrzeuge 12, 13 zum Beispiel eine digitale Karte 19 erzeugen, in welcher Objekte 20 einer Umgebung 21 der Kraftfahrzeuge 12, 13 kartographiert sein können. Beispielsweise kann als Objekt 20 ein Schlagloch auf einer Fahrbahn 22 kartographiert sein. Um die Informationen über alle Objekte 20 zu sammeln, ist es bei dem System 10 aber nicht nötig, dass über die Kommunikationsverbindungen 15, 17 dauerhaft eine große Datenmenge übertragen wird. Es kann stattdessen vorgesehen sein, dass das Kraftfahrzeug 12 mittels einer Detektionseinrichtung 23 nur eine Begegnung oder ein Vorkommen des Objekts 20 detektiert, ohne dass das Objekt 20 ausreichend genau für die Karte 19 beschrieben wird. Die Detektionseinrichtung 23 kann hierzu zum Beispiel zumindest einen Sensor, zum Beispiel eine Kamera und/oder einem Beschleunigungssensor und/oder einen Radarsensor (um nur Beispiele zu nennen), umfassen. Falls die Begegnung mit dem Objekt 20 als Fahrereignis 24 mittels der Detektionseinrichtung 23 von dem Kraftfahrzeug 12 detektiert wird, kann das Kraftfahrzeug 12 das Fahrereignis 24 mittels erster Ereignisdaten 25 an die Servervorrichtung 11 über die Kommunikationsverbindung 15 signalisieren. Damit ist in der Servervorrichtung 11 bekannt, dass ein bestimmtes Fahrereignis 24 stattgefunden hat. Zum Signalisieren des Fahrereignisses 24 kann eine Datenmenge der Ereignisdaten 25 kleiner sein als eine Datenmenge, die benötigt ist, um das Objekt 20 in der Karte 19 zu kartographieren. Bei Empfangen oder in Abhängigkeit von den Ereignisdaten 25 kann die Servervorrichtung 11 Konfigurationsdaten 26 erzeugen, die über die Kommunikationsverbindung 17 an das Kraftfahrzeug 13 übertragen werden können. Die Servervorrichtung 11 kann als Kraftfahrzeug 13 ein solches Kraftfahrzeug ermitteln, von dem zum Beispiel eine Fahrroute bekannt ist und dessen Fahrroute zu dem Objekt 20 führt, sodass sich bei Erreichen des Objekts 20 für das Kraftfahrzeug 13 ebenfalls das Fahrereignis 24, zum Beispiel das Überfahren des Schlaglochs oder eine Vorbeifahrt an dem Schlagloch, ergibt.

Das Fahrzeug 13 kann ebenfalls eine Detektionseinrichtung 27 aufweisen, die in der beschriebenen Weise ausgestaltet sein kann. Durch die Konfigurationsdaten 26 kann die Detektionsschaltung 27 in der Weise konfiguriert werden, dass mittels der Detektionsschaltung 27 zu dem Objekt 20, d.h. zu dem Fahrereignis 24, zweite Ereignisdaten 28 erzeugt werden, deren Datenmenge größer ist als diejenige der Ereignisdaten 25. Die Ereignisdaten 28 können dann ausreichen, um das Objekt 20 in der Karte 19 zu kartographieren. Beispielsweise können die Ereignisdaten 25 lediglich eine Erschütterung des Kraftfahrzeugs 12 beim Überfahren eines Schlagloch signalisieren. Die Ereignisdaten 28 können dann zum Beispiel ein Kamerabild von dem Objekt 20 enthalten, welches nicht in den Ereignisdaten 25 enthalten ist.

Somit werden mittels der Servervorrichtung 11 für einzelne Kraftfahrzeuge während des Betriebs die im jeweiligen Kraftfahrzeug zu sammelnden Ereignisdaten 25, 28 nach den Anforderungen aus der Servervorrichtung 11 mittels der Konfigurationsdaten 26 konfiguriert. Basierend auf den Ergebnissen, die das erste Kraftfahrzeug 12 gesendet hat, werden davon abhängig weitere Ereignisdaten 28 aus einem anderen Kraftfahrzeug 13 oder mehreren anderen Kraftfahrzeugen in der Umgebung 21 angefordert, so dass insbesondere eine tiefergehende Analyse des Fahrereignisses 24 ermöglicht ist und/oder hieraus weitere Funktionalitäten der Servervorrichtung 11, wie zum das Erstellen oder Erzeugen der Karte 19 durchgeführt werden kann. Die sich hierdurch ergebende vergrößerte Datenmenge der Ereignisdaten 28 wird dabei nur im relevanten Umfeld oder in der relevanten Umgebung 21 angefordert und somit insbesondere nicht flächendeckend.

Ein Beispiel ist das beschriebene Kraftfahrzeug 12, das an seiner aktuellen Position ein Schlagloch als Objekt 20 mittels der Ereignisdaten 25 signalisieren kann. Andere Kraftfahrzeuge, wie das Kraftfahrzeug 13, die ebenfalls auf dieser Straße unterwegs sind und sich der Position des Schlaglochs nähern, werden mittels der Konfigurationsdaten 26 so konfiguriert, dass sie in einem vorbestimmten Umkreis der gemeldeten Schlaglochposition zum Beispiel Höhenstandswerte aus dem Fahrwerk als Ereignisdaten 28 senden. Insbesondere ist die Auflösung der Höhenstandswerte größer als diejenige der Detektionsschaltung 23 des Kraftfahrzeugs 12. Aus diesen Werten kann dann in der Servervorrichtung 11 die Information "Schlagloch" verfeinert oder mit einem größeren Detaillierungsgrad erzeugt werden, um somit zum Beispiel die Tiefe und/oder die Ausdehnung des Schlaglochs in der Straßenoberfläche 22 der Straße zu ermitteln. Basierend darauf kann zum Beispiel eine Warnung vor dem Schlagloch unterschiedlich ausfallen oder erstellt werden.

Somit ergibt sich die optimale Verwendung der zur Verfügung stehende Übertragungsbandbreite der Kommunikationsverbindungen 15, 17 hinsichtlich zum Beispiel Kosteneinsparung, indem die Bandbreitennutzung bei gleichzeitiger erhöhter Analysemöglichkeit nur im Bedarfsfall vergrößert wird. Dies geschieht durch umfangreichere Datenerfassung nur dort, wo eine entsprechende Datentiefe oder Datenmenge nötig wird, was anhand der Ereignisdaten 25 erkannt wird.

Die Detektionseinrichtung 23, 27 in den Kraftfahrzeugen 12, 13 des Systems 10 ist über Kommandos oder Konfigurationsdaten 26 der Servervorrichtung 11 konfigurierbar, indem zum Beispiel eine Kommunikationseinrichtung des Kraftfahrzeugs 12, 13 über ein Fahrzeug-Bussystem (zum Beispiel CAN - Controller Area Network) die Konfigurationsdaten 26 an die Detektionseinrichtung 23, 27 überträgt. Serverseitig in der Servervorrichtung ist bevorzugt eine Auswerte Logik bereitgestellt, die bestimmt, zu welchen Fahrereignissen 24, die aus dem ersten Kraftfahrzeug 12 mittels der Ereignisdaten 25 gemeldet oder signalisiert werden, eine weitergehende oder tiefere Analyse vorgesehen ist. Entsprechende Konfigurationsdaten 26 werden dann von zumindest einem zweiten Kraftfahrzeug 13 mittels dessen Detektionseinrichtung 27 ausgeführt. Die Fahrereignisse 24 können, müssen aber nicht ortsbasiert oder zeitbasiert sein. Die Servervorrichtung 11 kann somit über eine Kommunikation mit der fahrzeugseitigen Detektionsschaltung 27 die Messung definierter Signale mittels der Konfigurationsdaten 26 konfigurieren oder einstellen oder anfordern.

Insgesamt zeigt das Beispiel, wie durch die Erfindung bei der fahrzeugbasierten Online-Datenerfassung eine ereignisbestimmte Messtiefe eingestellt werden kann.

## Patentansprüche

1. Verfahren zum Vermessen eines Fahrereignisses (24), wobei eine stationäre Servervorrichtung (11):
- aus einem ersten Kraftfahrzeug (12) erste Ereignisdaten (25) empfängt, welche das mittels einer Detektionseinrichtung (23) des ersten Kraftfahrzeugs (12) erkannte Fahrereignis (24) signalisieren, wobei das Fahrereignis (24) eine Begegnung mit einem Objekt in einer Umgebung und/oder eine Fahrt bei einer vorbestimmten Fahrbedingung umfasst,
- nach dem Empfangen der ersten Ereignisdaten (25) für mehrere Kraftfahrzeuge ermittelt, in welchem davon das Fahrereignis (24) stattfindet oder welchem davon das Fahrereignis (24) bevorsteht, und zumindest eines der Kraftfahrzeuge, in welchem das Fahrereignis (24) stattfindet oder welchem das Fahrereignis (24) bevorsteht, als zweites Kraftfahrzeug (13) auswählt,
- in Abhängigkeit von den ersten Ereignisdaten (25) Konfigurationsdaten (26) zum Umkonfigurieren einer Detektionseinrichtung (27) eines von dem ersten Kraftfahrzeug (12) verschiedenen zweiten Kraftfahrzeugs (26) erzeugt; wobei mittels der Konfigurationsdaten (26) eine Datenmenge der zweiten Ereignisdaten (28) eingestellt wird; wobei die Datenmenge größer als eine Datenmenge der ersten Ereignisdaten (25) ist und wobei die zweiten Ereignisdaten (28) mehr Details des Fahrereignisses (24) beschreiben als die ersten Ereignisdaten (25),
- die Konfigurationsdaten (26) an das zweite Kraftfahrzeug (13) zum Erzeugen von das Fahrereignis (24) beschreibenden zweiten Ereignisdaten (28) gemäß Anforderungen der Servervorrichtung (11) aussendet, und
- auf der Grundlage der zweiten Ereignisdaten (28) eine Beschreibung des Fahrereignisses (24) in einer digitalen Umgebungskarte (19) einträgt.

2. Verfahren nach Anspruch 1, wobei durch die Konfigurationsdaten (26) das Erzeugen der zweiten Ereignisdaten (28) ortsbasiert und/oder zeitbasiert und/oder wetterbasiert ausgelöst wird.

3. Verfahren nach einem der vorhergehenden Ansprüche, wobei durch die Konfigurationsdaten (26) das Erzeugen von solchen zweiten Ereignisdaten (28), die zumindest einen fahrzeuginternen Vorgang des zweiten Kraftfahrzeugs (13) beschreiben, ausgelöst wird.

4. Servervorrichtung (11) zum Vermessen eines Fahrereignisses (24), das jeweils in mehreren Kraftfahrzeugen (12, 13) stattfindet, wobei die Servervorrichtung (11) eine Prozessoreinrichtung aufweist, die dazu eingerichtet ist, die eine Servervorrichtung (11) betreffenden Verfahrensschritte eines Verfahrens nach einem der vorhergehenden Ansprüche durchzuführen.

5. System (10) aufweisend:
- ein erstes Kraftfahrzeug (12), das eine Detektionseinrichtung (23) zum Detektieren eines vorbestimmten Fahrereignisses (24) und zum Erzeugen von ersten Ereignisdaten (25), die das Fahrereignis (24) signalisieren, aufweist,
- ein zweites Kraftfahrzeug (13), das eine mittels Konfigurationsdaten (26) über eine Funkverbindung (18) konfigurierbare Detektionseinrichtung (27) zum Detektieren des Fahrereignisses (24) und zum Erzeugen von zweiten Ereignisdaten (28), die das Fahrereignis (24) in dem zweiten Kraftfahrzeug (13) beschreiben, aufweist, wobei eine Beschreibungsgenauigkeit der zweiten Ereignisdaten (28) von den Konfigurationsdaten (26) abhängig ist, und
- eine Servervorrichtung (11) nach Anspruch 4.

## Claims

1. Method for measuring a driving event (24), wherein a stationary server device (11):
- receives first event data (25) from a first motor vehicle (12), which event data indicate the driving event (24) recognised by means of a detection device (23) of the first motor vehicle (12), wherein the driving event (24) comprises an encounter with an object in a environment and/or a drive in a predetermined driving condition,
- determines after receiving the first event data (25) for a plurality of motor vehicles, in which of them the driving event (24) takes place or in which of them the driving event (24) is imminent, and selects at least one of the motor vehicles in which the driving event (24) takes place or in which the driving event (24) is imminent as a second motor vehicle (13),
- generates configuration data (26) for reconfiguring a detection device (27) of a second motor vehicle (26) different from the first motor vehicle (12) as a function of the first event data (25); wherein a data quantity of the second event data (28) is set by means of the configuration data (26); wherein the data quantity is larger than a data quantity of the first event data (25) and wherein the second event data (28) describe more details of the driving event (24) than the first event data (25),
- transmits the configuration data (26) to the second motor vehicle (13) for generating second event data (28) describing the driving event (24) according to the requirements of the server device (11), and
- on the basis of the second event data (28) enters a description of the driving event (24) in a digital map of the surrounding area (19).

2. Method according to claim 1, wherein by means of the configuration data (26) the generation of the second event data (28) is triggered based on location and/or time and/or weather.

3. Method according to any of the preceding claims, wherein by the configuration data (26) the generation of such second event data (28) is triggered which describe a least one vehicle-internal operation of the second motor vehicle (13).

4. Server device (11) for measuring a driving event (24) that takes place in a plurality of motor vehicles (12, 13), wherein the server device (11) has a processor device which is configured to carry to the method steps relevant to a server device (11) of a method according to any of the preceding claims.

5. System (10) comprising:
- a first motor vehicle (12) comprising a detection device (23) for detecting a predetermined driving event (24) and for generating first event data (25) which indicate the driving event (24),
- a second motor vehicle (13), which comprises a detection device (27) configurable by means of configuration data (26) via a radio link (18) for detecting the driving event (24) and for generating second event data (28) which describe the driving event (24) in the second motor vehicle (13), wherein a description accuracy of the second driving event (28) is dependent on the configuration data (26), and
- a server device (11) according to claim 4.

## Revendications

1. Procédé pour mesurer un événement de conduite (24), dans lequel un dispositif de serveur stationnaire (11) :
- reçoit d'un premier véhicule automobile (12) de premières données d'événement (25), lesquelles signalent l'événement de conduite (24) détecté au moyen d'un dispositif de détection (23) du premier véhicule automobile (12), dans lequel l'événement de conduite (24) comprend une rencontre avec un objet dans un environnement et/ou un trajet dans une condition de conduite prédéterminée,
- après la réception des premières données d'événement (25) pour plusieurs véhicules automobiles, détermine dans lequel d'entre eux l'événement de conduite (24) a lieu ou dans lequel d'entre eux l'événement de conduite (24) est imminent, et sélectionne au moins un des véhicules automobiles dans lequel l'événement de conduite (24) a lieu ou dans lequel l'événement de conduite (24) est imminent en tant que second véhicule automobile (13)
- en fonction des premières données d'événement (25), génère des données de configuration (26) pour reconfigurer un dispositif de détection (27) d'un second véhicule automobile (26) différent du premier véhicule automobile (12) ; dans lequel une quantité de données des secondes données d'événement (28) est réglée au moyen des données de configuration (26) ; dans lequel la quantité de données est supérieure à une quantité de données des premières données d'événement (25) et dans lequel les secondes données d'événement (28) décrivent plus de détails de l'événement de conduite (24) que les premières données d'événement (25),
- émet les données de configuration (26) au second véhicule automobile (13) pour générer de secondes données d'événement (28) décrivant l'événement de conduite (24) conformément à des exigences du dispositif de serveur (11), et
- entre une description de l'événement de conduite (24) dans une carte d'environnement numérique (19) sur la base des secondes données d'événement (28).

2. Procédé selon la revendication 1, dans lequel la génération des secondes données d'événement (28) est déclenchée par les données de configuration (26) en fonction du lieu et/ou en fonction du temps et/ou en fonction de la météo.

3. Procédé selon l'une quelconque des revendications précédentes, dans lequel les données de configuration (26) déclenchent la génération de telles secondes données d'événement (28), qui décrivent au moins un processus interne au véhicule du second véhicule automobile (13).

4. Dispositif de serveur (11) pour mesurer un événement de conduite (24) qui a lieu respectivement dans plusieurs véhicules automobiles (12, 13), dans lequel le dispositif de serveur (11) présente un dispositif de processeur qui est configuré pour mettre en œuvre les étapes de procédé relatives à un dispositif de serveur (11) d'un procédé selon l'une quelconque des revendications précédentes.

5. Système (10) présentant :
- un premier véhicule automobile (12) qui présente un dispositif de détection (23) pour détecter un événement de conduite prédéterminé (24) et pour générer de premières données d'événement (25) qui signalent l'événement de conduite (24),
- un second véhicule automobile (13) qui présente un dispositif de détection configurable (27) au moyen de données de configuration (26) par l'intermédiaire d'une liaison radio (18), pour détecter l'événement de conduite (24) et pour générer de secondes données d'événement (28) qui décrivent l'événement de conduite (24) dans le second véhicule automobile (13), dans lequel une précision de description des secondes données d'événement (28) dépend des données de configuration (26), et
- un dispositif de serveur (11) selon la revendication 4.
